# FASCICULE DE BREVET EUROPEEN

(11) **EP 4 031 382 B1**
(45) Date de publication et mention de la délivrance du brevet: **06.09.2023**
(21) Numéro de dépôt: 20820253.1
(22) Date de dépôt: 17.09.2020
(51) Int. Cl.: B60C 1/00, C08L 47/00, C08F 210/02, C08C 19/22, C08C 19/25, C08C 19/44

(54) **COPOLYMERES D'ETHYLENE ET DE 1,3-DIENE FONCTIONNELS**
FUNKTIONALES ETHYLEN UND 1,3-DIEN-COPOLYMER
FUNCTIONAL ETHYLENE AND 1,3-DIENE COPOLYMERS

(30) Priorité: 18.09.2019 FR 1910304
(43) Date de publication de la demande: 27.07.2022
(73) Titulaire: COMPAGNIE GENERALE DES ETABLISSEMENTS MICHELIN, 63000 Clermont-Ferrand (FR)
(72) Inventeur: MORESO, Emma, 63040 CLERMONT-FERRAND Cedex 9 (FR); LAFAQUIERE, Vincent, 63040 CLERMONT-FERRAND Cedex 9 (FR)
(74) Mandataire: Gandon-Pain, Sylvie
(86) Numéro de dépôt international: PCT/FR2020/051602
(87) Numéro de publication internationale: WO 2021/053294

(56) Documents cités:
- WO-A1-2018/189456
- CN-A- 107 903 349
- US-A1- 2018 355 073

## Description

La présente invention concerne les copolymères d'éthylène et de 1,3-diène destinés à être utilisés dans des compositions de caoutchouc pour pneumatique.

Les copolymères diéniques les plus largement utilisés dans la confection des pneumatiques sont les polybutadiènes, les polyisoprènes, en particulier le caoutchouc naturel, et les copolymères de 1,3-butadiène et de styrène.

Il a été proposé, notamment dans le document WO 2014114607, d'utiliser des copolymères d'éthylène et de 1,3-butadiène dans des compositions de caoutchouc pour pneumatique. Ces copolymères sont synthétisés par copolymérisation d'éthylène et du 1,3-butadiène en présence d'un système catalytique comprenant un métallocène de terre rare. Les compositions de caoutchouc renforcées de copolymère d'éthylène et de 1,3-butadiène sont notamment décrites pour une utilisation dans une bande de roulement d'un pneumatique. Ces compositions de caoutchouc diénique une fois réticulées présentent une rigidité bien plus élevée que les compositions de caoutchouc diénique traditionnellement utilisées et peuvent donc s'avérer inappropriées pour certaines applications. Il existe donc un besoin de diminuer significativement la rigidité à cuit de telles compositions comprenant un caoutchouc diénique à base d'éthylène.

La Demanderesse a découvert un copolymère qui permet de résoudre les problèmes mentionnés.

Ainsi un premier objet de l'invention est un copolymère d'éthylène et d'un 1,3-diène de formule (I), lequel copolymère porte une fonction silanol ou alcoxysilane,

CH₂=CR-CH=CH₂ (I)

le symbole R représentant une chaîne hydrocarbonée ayant 3 à 20 atomes de carbone.

Un autre objet de l'invention est une composition de caoutchouc qui comprend un copolymère conforme à l'invention, une charge inorganique renforçante et un système de réticulation, lequel copolymère est un élastomère.

L'invention concerne aussi un pneumatique qui comprend une composition de caoutchouc conforme à l'invention.

L'invention concerne également un procédé pour préparer un copolymère conforme à l'invention, lequel procédé comprend les étapes suivantes :
a) la copolymérisation d'éthylène et d'un 1,3-diène de formule (I) en présence d'un système catalytique comprenant un métallocène de formule (II) et un organomagnésien de formule (III)

   CH₂=CR-CH=CH₂ (I),

   P(Cp¹Cp²)Nd(BH₄)_{(1+y)-}L_{y}-Nₓ (II)

   MgR¹R² (III)

   le symbole R représentant une chaîne hydrocarbonée ayant 3 à 20 atomes de carbone, Cp¹ et Cp², identiques ou différents, étant choisis dans le groupe constitué par le groupe cyclopentadiényle de formule C₅H₄, le groupe fluorényle non substitué de formule C₁₃H₈ et les groupes fluorényles substitués,
   P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
   y, nombre entier, étant égal ou supérieur à 0,
   x, nombre entier ou non, étant égal ou supérieur à 0,
   L représentant un métal alcalin choisi dans le groupe constitué par le lithium, le sodium et le potassium,
   N représentant une molécule d'un éther, de préférence diéthyléther ou tétrahydrofuranne, R¹ et R², identiques ou différents, représentant un groupe carboné,
b) la réaction d'un agent de fonctionnalisation, composé de formule (IV), avec le copolymère obtenu à l'étape a),

   Si(Fc¹)_{4-g} (Rc²)_{g} (IV)

   les symboles Fc¹, identiques ou différents, représentant un groupe alcoxy ou un atome d'halogène,
   les symboles Rc², identiques ou différents, représentant un atome d'hydrogène, une chaîne hydrocarbonée ou une chaîne hydrocarbonée substituée par une fonction chimique Fc², g étant un nombre entier allant de 0 à 2,
c) le cas échéant une réaction d'hydrolyse.

### Description détaillée

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties en poids d'élastomère (du total des élastomères si plusieurs élastomères sont présents).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un copolymère sont exprimés en pourcentage molaire par rapport à la totalité des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Le 1,3-diène de formule (I) comme définie plus haut et utile aux besoins de l'invention étant un 1,3 diène substitué, le 1,3-diène peut donner lieu à des unités de configuration 1,2 représentée par la formule (1), de configuration 3,4 représentée par la formule (2) et de configuration 1,4 dont la forme trans est représentée ci-après par la formule (3).

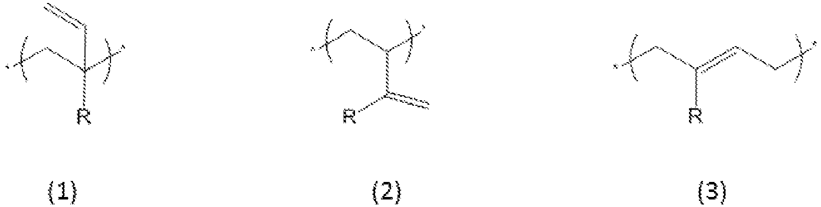

Comme cela est également bien connu, l'unité éthylène est une unité de motif -(CH₂-CH₂)-.

Le copolymère utile aux besoins de l'invention étant un copolymère d'éthylène et du 1,3-diène, les unités monomères du copolymère sont donc des unités résultant de la polymérisation de l'éthylène et du 1,3-diène. Le copolymère comprend donc des unités éthylène et des unités du 1,3-diène. Selon l'un quelconque des modes de réalisation de l'invention, le 1,3-diène est un seul composé, c'est-à-dire un seul (en anglais « one ») 1,3-diène de formule (I) ou est un mélange de 1,3-diènes de formule (I), les 1,3-diènes du mélange se différenciant les uns des autres par le groupe représenté par le symbole R. Le copolymère utile aux besoins de l'invention est avantageusement un copolymère statistique selon l'un quelconque des modes de réalisation de l'invention.

De préférence, le copolymère contient des unités éthylène qui représentent plus de 50% en moles des unités monomères du copolymère, c'est-à-dire plus de 50% en moles des unités éthylène et des unités du 1,3-diène. De manière très préférentielle, le copolymère contient des unités éthylène qui représentent au moins 60% en mole des unités monomères du copolymère. De manière plus préférentielle, le copolymère contient des unités éthylène qui représentent au moins 70% en mole des unités monomères du copolymère. Autrement dit, le copolymère contient préférentiellement plus de 50% en mole d'unités éthylène, plus préférentiellement au moins 60% en mole d'unités éthylène, encore plus préférentiellement au moins 70% en mole d'unités éthylène.

De préférence, le copolymère contient au plus 90% en mole d'unités éthylène, auquel cas les unités éthylène dans le copolymère représentent au plus 90% en mole des unités monomères du copolymère.

Selon un mode de réalisation particulier de l'invention, le copolymère contient au plus 85% en mole d'unités éthylène, auquel cas les unités éthylène dans le copolymère représentent au plus 85% en mole des unités monomères du copolymère.

Selon un mode de réalisation préférentiel de l'invention, dans le copolymère conforme à l'invention, les unités éthylène représentent de 60 à 90% en mole des unités monomères du copolymère, avantageusement de 70 à 90% en mole des unités monomères du copolymère.

Selon un autre mode de réalisation particulier de l'invention, dans le copolymère conforme à l'invention, les unités éthylène représentent de 60 à 85% en mole des unités monomères du copolymère, avantageusement de 70 à 85% en mole des unités monomères du copolymère.

Dans la formule (I) du 1,3-diène, la chaîne hydrocarbonée représentée par le symbole R est une chaîne hydrocarbonée de 3 à 20 atomes de carbone. De préférence, le symbole R représente une chaîne hydrocarbonée ayant 6 à 16 atomes de carbone.

La chaîne hydrocarbonée représentée par le symbole R peut être une chaîne saturée ou insaturée. De préférence, le symbole R représente une chaîne aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. Mieux, le symbole R représente une chaîne hydrocarbonée acyclique insaturée et ramifiée. La chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène ou le β-farnésène.

Selon un mode de réalisation préférentiel de l'invention, le 1,3-diène est le myrcène.

Selon un autre mode de réalisation préférentiel de l'invention, le 1,3-diène est le β-farnésène.

De préférence, le copolymère d'éthylène et du 1,3-diène présente une température de transition vitreuse inférieure à -35°C, de préférence comprise entre -90°C et -35°C.

Selon une première variante de l'invention, le copolymère contient des unités du 1,3-diène de configuration 1,2 ou 3,4, l'ensemble constitué par les unités du 1,3-diène de configuration 1,2 et les unités du 1,3-diène de configuration 3,4 représentant plus de 50% en mole des unités du 1,3-diène. En d'autres termes, selon cette première variante, les unités du 1,3-diène dans le copolymère sont à plus de 50% en mole des unités de configuration 1,2 ou de configuration 3,4. Dans cette variante, le complément à 100% en mole des unités du 1,3-diène dans le copolymère est constitué tout ou partie d'unités du 1,3-diène de configuration 1,4. Selon cette première variante, préférentiellement plus de la moitié des unités du 1,3-diène de configuration 1,4 sont de configuration 1,4-trans, plus préférentiellement toutes les unités du 1,3-diène de configuration 1,4 sont de configuration 1,4-trans.

Selon une deuxième variante de l'invention, le copolymère contient des unités du 1,3-diène qui sont à plus de 50% de configuration 1,4. En d'autre terme, les unités du 1,3-diène de configuration 1,4 représentent plus de 50% en mole des unités du 1,3-diène. Dans cette variante, le complément à 100% en mole des unités du 1,3-diène dans le copolymère est constitué tout ou partie d'unités du 1,3-diène de configuration 1,2 ou 3,4. De préférence, les unités du 1,3-diène de configuration 1,4 représentent plus de 70% en mole des unités du 1,3-diène. Avantageusement, les unités du 1,3-diène de configuration 1,4 sont pour plus de la moitié d'entre elles de configuration 1,4-trans, ce qui signifie que les unités du 1,3-diène de configuration 1,4-trans représentent plus de 50% en mole des unités du 1,3-diène de configuration 1,4.

Le copolymère peut être préparé par un procédé qui comprend une étape a) et une étape b). L'étape a) est la copolymérisation de l'éthylène et du 1,3-diène utile aux besoins de l'invention en présence d'un système catalytique comprenant un métallocène de formule (II) et un organomagnésien de formule (III)

P(Cp¹Cp²)Nd(BH₄)_{(1+y)}-L_{y}-Nₓ (II)

MgR¹R² (III)

Cp¹ et Cp², identiques ou différents, étant choisis dans le groupe constitué par le groupe cyclopentadiényle de formule C₅H₄, le groupe fluorényle non substitué de formule C₁₃H₈ et les groupes fluorényles substitués,
P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne, R¹ et R², identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

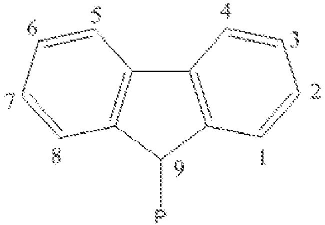

Le groupe P pontant les deux groupes Cp¹ et Cp² désigne de préférence le groupe SiMe₂.

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utile aux besoins de l'invention est de formule MgR¹R² dans laquelle R¹ et R², identiques ou différents, représentent un groupe carboné. On entend par groupe carboné un groupe qui contient un ou plusieurs atomes de carbone. De préférence, R¹ et R² contiennent 2 à 10 atomes de carbone. De manière plus préférentielle, R¹ et R² représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Lorsque le copolymère utile aux besoins de l'invention est un copolymère qui a une microstructure telle que définie selon la première variante de l'invention, il est préparé selon le procédé mentionné dans la présente demande en utilisant un métallocène de formule (II) dans laquelle Cp¹ et Cp², identiques ou différents, sont choisis dans le groupe constitué par les groupes fluorényles substitués et le groupe fluorényle non substitué de formule C₁₃H₈. Pour cette variante, conviennent en particulier les métallocènes de formules suivantes dans lesquelles le symbole Flu présente le groupe fluorényle de formule C₁₃H₈ : [{Me₂SiFlu₂Nd(µ-BH₄)₂Li(THF)}₂] ; [Me₂SiFlu₂Nd(µ-BH₄)₂Li(THF)] ; [Me₂SiFlu₂Nd(µ-BH₄)(THF)] ; [{Me₂SiFlu₂Nd(µ-BH₄)(THF)}₂] ; [Me₂SiFlu₂Nd(µ-BH₄)].

Lorsque le copolymère utile aux besoins de l'invention est un copolymère qui a une microstructure telle que définie selon la deuxième variante de l'invention, il est préparé selon le procédé mentionné dans la présente demande en utilisant un métallocène de formule (II) dans laquelle Cp¹ désigne un groupe cyclopentadiényle Cp de formule C₅H₄ et Cp² un groupe fluorényle Flu de formule C₁₃H₈.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

Au cours de la polymérisation de l'éthylène et du 1,3-diène dans un réacteur de polymérisation, un ajout continu d'éthylène et du 1,3-diène peut être réalisé dans le réacteur de polymérisation, auquel cas le réacteur de polymérisation est un réacteur alimenté. Ce mode de réalisation est tout particulièrement adapté pour la synthèse de copolymère statistique.

L'étape b) consiste à faire réagir un agent de fonctionnalisation avec le copolymère obtenu à l'étape a) pour fonctionnaliser le copolymère. L'agent de fonctionnalisation est un composé de formule (IV),

Si(Fc¹)_{4-g} (Rc²)_{g} (IV)

les symboles Fc¹, identiques ou différents, représentant un groupe alcoxy ou un atome d'halogène,
les symboles Rc², identiques ou différents, représentant un atome d'hydrogène, une chaîne hydrocarbonée ou une chaîne hydrocarbonée substituée par une fonction chimique Fc², g étant un nombre entier allant de 0 à 2.

Lorsque le symbole Fc¹ représente un groupe alcoxy, le groupe alcoxy est de préférence méthoxy ou éthoxy. Lorsque le symbole Fc¹ représente un atome d'halogène, l'atome d'halogène est de préférence le chlore.

Selon un mode de réalisation préférentiel de l'invention, au moins un des symboles Fc¹ représente un groupe alcoxy, en particulier méthoxy ou éthoxy. Avantageusement, l'agent de fonctionnalisation est alors de formule (IV-1)

MeOSi(Fc¹)_{3-g} (Rc²)_{g} (IV-1)

les symboles Fc¹, Rc² et g étant tels que définis dans la formule (IV).

Selon un mode de réalisation plus préférentiel, au moins deux des symboles Fc¹ représentent un groupe alcoxy, en particulier méthoxy ou éthoxy. Avantageusement, l'agent de fonctionnalisation est alors de formule (IV-2)

(MeO)₂Si(Fc¹)_{2-g} (Rc²)_{g} (IV-2)

les symboles Fc¹, Rc² et g étant tels que définis dans la formule (IV).

Selon un mode de réalisation encore plus préférentiel, au moins trois des symboles Fc¹ représentent un groupe alcoxy, en particulier méthoxy ou éthoxy. Avantageusement, l'agent de fonctionnalisation est alors de formule (IV-3)

(MeO)₃Si(Fc¹)_{1-g} (Rc²)_{g} (IV-3)

les symboles Fc¹, Rc² étant tels que définis dans la formule (IV) et g nombre entier allant de 0 à 1.

Selon un mode de réalisation encore plus avantageux, l'agent de fonctionnalisation est de formule (IV-4)

(MeO)₃SiRc² (IV-4)

Rc² étant tel que défini dans la formule (IV).

Parmi les chaînes hydrocarbonées représentée par les symboles Rc² dans les formules (IV), (IV-1), (IV-2), (IV-3) et (IV-4), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique Fc² qui sont représentée par les symboles Rc² dans les formules (IV), (IV-1), (IV-2), (IV-3) et (IV-4), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique Fc²,autrement dit, une valence de la chaîne alcanediyle pour la fonction Fc², l'autre valence pour l'atome de silicium de la fonction méthoxysilane.

Dans les formules (IV), (IV-1), (IV-2), (IV-3) et (IV-4), on entend par fonction chimique un groupe qui est différent d'un groupe hydrocarboné saturé et qui peut participer à des réactions chimiques. L'homme du métier comprend que la fonction chimique Fc² est un groupe chimiquement inerte vis-à-vis des espèces chimiques présentes dans le milieu de polymérisation. La fonction chimique Fc² peut être sous une forme protégée, comme par exemple dans le cas de la fonction amine primaire, amine secondaire ou thiol. A titre de fonction chimique Fc², peuvent être citées les fonctions éther, thioéther, amine primaire protégée, amine secondaire protégée, amine tertiaire, thiol protégé, silyle. De préférence, la fonction chimique Fc² est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

Selon l'un quelconque des modes de réalisation de l'invention, g est de préférence différent de 0, ce qui implique que l'agent de fonctionnalisation comprend au moins une liaison Si-Rc².

A titre d'agent de fonctionnalisation, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, 3-méthoxy-3,8,8,9,9-pentaméthyl-2-oxa-7-thia-3,8-disiladecane, triméthoxy-méthylsilane, triéthoxyméthylsilane, triméthoxyéthylsilane, triéthoxyéthylsilane, (N,N-diméthylaminopropyl)triméthoxysilane, (N,N-diméthylaminopropyl)triéthoxysilane, (N-(3-triméthoxysilyl)propyl)-N-(triméthylsilyl)silanamine, (N-(3-triéthoxysilyl)propyl)-N-(triméthyl-silyl)silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)-propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

L'agent de fonctionnalisation est ajouté typiquement au milieu de polymérisation résultant de l'étape a). Il est typiquement ajouté au milieu de polymérisation à un taux de conversion des monomères choisi par l'homme du métier selon la macrostructure souhaitée du copolymère. L'étape a) étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0.25 à 10 moles d'agent de fonctionnalisation pour 1 mole de co-catalyseur, de préférence de 2 à 4 moles d'agent de fonctionnalisation pour 1 mole de co-catalyseur.

L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Une fois fonctionnalisé, le copolymère peut être récupéré, notamment en l'isolant du milieu réactionnel. Les techniques pour séparer le copolymère du milieu réactionnel sont bien connues de l'homme du métier et choisies par l'homme du métier selon la quantité de copolymère à séparer, sa macrostructure et les outils mis à disposition de l'homme du métier. Peuvent être cités par exemple les techniques de coagulation du copolymère dans un solvant tel que le méthanol, les techniques d'évaporation du solvant du milieu réactionnel et des monomères résiduels, par exemple sous pression réduite.

Lorsque l'agent de fonctionnalisation est de formule (IV), (IV-1) ou (IV-2) et g est égal à 2, l'étape b) peut être suivie d'une réaction d'hydrolyse pour former un copolymère portant une fonction silanol. L'hydrolyse peut être conduite par une étape de stripping de la solution contenant le copolymère à l'issue de l'étape b), de manière connue par l'homme du métier.

Lorsque l'agent de fonctionnalisation est de formule (IV), (IV-1), (IV-2), (IV-3) ou (IV-4), que g est différent de 0 et que Rc² représente une chaîne hydrocarbonée substituée par une fonction Fc² sous une forme protégée, l'étape b) peut être aussi suivie d'une réaction d'hydrolyse pour déprotéger la fonction. La réaction d'hydrolyse, étape de déprotection de la fonction, est généralement conduite en milieu acide ou basique selon la nature chimique de la fonction à déprotéger. Par exemple, un groupe silyle, en particulier triméthylsilyle ou terbutyldiméthylsilyle, qui protège une fonction amine ou thiol peut être hydrolysé en milieu acide ou basique de manière connue par l'homme du métier. Le choix des conditions de déprotection est fait judicieusement par l'homme du métier en tenant compte de la structure chimique du substrat à déprotéger.

L'étape c) du procédé conforme à l'invention est une étape optionnelle selon que l'on souhaite transformer ou non le groupe fonctionnel en fonction silanol ou que l'on souhaite déprotéger ou non la fonction protégée. Préférentiellement, l'étape c) est conduite avant de séparer le copolymère du milieu réactionnel à l'issue de l'étape b) ou bien simultanément à cette étape de séparation.

La fonction silanol ou alcoxysilane portée par le copolymère conforme à l'invention est préférentiellement en extrémité de chaîne du copolymère. Mieux, elle est attachée directement par une liaison covalente à l'unité terminale du copolymère, ce qui revient à dire que l'atome de silicium de la fonction est lié directement de façon covalente à un atome de carbone de l'unité terminale du copolymère. Par unité terminale, on entend la dernière unité insérée dans la chaîne copolymère par copolymérisation, unité qui est précédée de l'unité pénultième, elle-même précédée de l'unité antepénultième.

Dans la présente demande, la fonction alcoxysilane ou silanol portée par le copolymère est désignée dans la présente demande par l'appellation le groupe fonctionnel F¹.

Selon une première variante de l'invention, le groupe fonctionnel F¹ est de formule (III-a)

Si(OR')_{3-f}(R")_{f} (III-a)

les symboles R', identiques ou différents, représentant un alkyle,
les symboles R", identiques ou différents, représentant un atome d'hydrogène, une chaîne hydrocarbonée ou une chaîne hydrocarbonée substituée par une fonction chimique F²,
f étant un nombre entier allant de 0 à 2.

Dans la formule (III-a), les symboles R' sont préférentiellement un alkyle ayant au plus 6 atomes de carbone, plus préférentiellement un méthyle ou un éthyle, encore plus préférentiellement un méthyle.

Si 3-f est supérieur à 1, les symboles R' sont avantageusement identiques, en particulier méthyle ou éthyle, plus particulièrement méthyle.

Selon une deuxième variante de l'invention, le groupe fonctionnel F¹ est de formule (III-b)

Si(OH)(R")₂, (III-b)

les symboles R", identiques ou différents, représentant un atome d'hydrogène, une chaîne hydrocarbonée ou une chaîne hydrocarbonée substituée par une fonction chimique F².

Parmi les chaînes hydrocarbonées représentée par les symboles R" dans les formules (III-a) et (III-b ), on peut citer les alkyles, notamment ceux ayant 1 à 6 atomes de carbone, préférentiellement méthyle ou éthyle, plus préférentiellement méthyle.

Parmi les chaînes hydrocarbonées substituées par une fonction chimique F² représentée par les symboles R² dans les formules (III-a) et (III-b), on peut citer les chaînes alcanediyles, notamment celles comportant au plus 6 atomes de carbone, tout particulièrement le groupe 1,3-propanediyle, le groupe alcanediyle portant un substituant, la fonction chimique F², autrement dit, une valence de la chaîne alcanediyle pour la fonction F², l'autre valence pour l'atome de silicium de la fonction silanol ou alcoxysilane.

Dans les formules (III-a) et (III-b), on entend par fonction chimique F² un groupe qui est différent d'un groupe hydrocarboné saturé et qui peut participer à des réactions chimiques. Parmi les fonctions chimiques qui peuvent convenir, on peut citer la fonction éther, la fonction thioéther, la fonction amine primaire, secondaire ou tertiaire, la fonction thiol, la fonction silyle. Les fonctions amine primaire ou secondaire ou thiol peuvent être protégées ou ne pas être protégées. Le groupe protecteur des fonctions amine et thiol est par exemple un groupe silyle, en particulier triméthylsilyle ou terbutyldiméthylsilyle. De préférence, la fonction chimique F² est une fonction amine primaire, secondaire, tertiaire ou une fonction thiol, la fonction amine primaire, secondaire ou thiol étant protégée par un groupe protecteur ou non protégée.

De préférence, les symboles R", identiques ou différents, représentent un alkyle ayant au plus 6 atomes de carbone ou une chaîne alcanediyle ayant au plus 6 atomes de carbone et substituée par une fonction chimique F² dans les formules (III-a) et (III-b).

A titre de groupe fonctionnel F¹, on peut citer les groupes diméthoxyméthylsilyle, diméthoxyéthylsilyle, diéthoxyméthysilyle, diéthoxyéthysilyle, 3-(N,N-diméthylamino)propyl-diméthoxysilyle, 3-(N,N-diméthylamino)propyldiéthoxysilyle, 3-aminopropyldiméthoxysilyle, 3-aminopropyldiéthoxysilyle, 3-thiopropyldiméthoxysilyle, 3-thiopropyldiéthoxysilyle, méthoxydiméthylsilyle, méthoxydiéthylsilyle, éthoxydiméthysilyle, éthoxydiéthysilyle, 3-(N,N-diméthylamino)propylméthoxyméthylsilyle, 3-(N,N-diméthylamino)propylméthoxy-éthylsilyle, 3-(N,N-diméthylamino)propyléthoxyméthylsilyle, 3-(N,N-diméthylamino)propyl-éthoxyéthylsilyle, 3-aminopropylméthoxyméthylsilyle, 3-aminopropylméthoxyéthylsilyle, 3-aminopropyléthoxyméthylsilyle, 3-aminopropyléthoxyéthylsilyle, 3-thiopropylméthoxy-méthylsilyle, 3-thiopropyléthoxyméthylsilyle, 3-thiopropylméthoxyéthylsilyle, 3-thiopropyl-éthoxyéthylsilyle.

A titre de groupe fonctionnel F¹, on peut aussi citer la forme silanol des groupes fonctionnels précédemment cités qui contiennent une et une seule (*en anglais* « one ») fonction éthoxy ou méthoxy, la forme silanol pouvant être obtenue par hydrolyse de la fonction éthoxy ou méthoxy. A ce titre conviennent les groupes diméthylsilanol, diéthylsilanol, 3-(N,N-diméthylamino)propylméthylsilanol, 3-(N,N-diméthylamino)propyl-éthylsilanol, 3-aminopropylméthylsilanol, 3-aminopropyléthylsilanol, 3-thiopropyléthyl-silanol, 3-thiopropylméthylsilanol.

A titre de groupe fonctionnel F¹, on peut également citer les groupes fonctionnels qu'ils soient sous la forme alcoxy ou silanol, qui ont été précédemment cités et qui comportent une fonction amine ou thiol sous une forme protégée par un groupe silyle, en particulier triméthylsilyle ou terbutyldiméthylsilyle.

Selon un mode de réalisation très préférentiel de l'invention, le groupe fonctionnel F¹ est de formule (III-a) dans laquelle f est égal à 1. Selon ce mode de réalisation très préférentiel, conviennent tout particulièrement les groupes pour lesquels R' est un méthyle ou un éthyle, comme par exemple les groupes diméthoxyméthylsilyle, diméthoxyéthylsilyle, diéthoxyméthysilyle, diéthoxyéthysilyle, 3-(N,N-diméthylamino)propyldiméthoxysilyle, 3-(N,N-diméthylamino)propyldiéthoxysilyle, 3-aminopropyldiméthoxysilyle, 3-aminopropyldiéthoxysilyle, 3-thiopropyldiméthoxysilyle, 3-thiopropyldiéthoxysilyle. Conviennent aussi les formes protégées de la fonction amine ou thiol des 4 derniers groupes fonctionnels cités dans la liste précédente par un groupe silyle, en particulier triméthylsilyle ou terbutyldiméthylsilyle.

Selon un mode de réalisation encore plus préférentiel de l'invention, le groupe fonctionnel F¹ est de formule (III-a) dans laquelle f vaut 1 et R' est un méthyle. Selon ce mode de réalisation encore plus préférentiel, conviennent tout particulièrement les groupes diméthoxyméthylsilyle, diméthoxyéthylsilyle, 3-(N,N-diméthylamino)propyldiméthoxysilyle, 3-aminopropyldiméthoxysilyle, 3-thiopropyldiméthoxysilyle, ainsi que les formes protégées de la fonction amine ou thiol du 3-aminopropyldiméthoxysilyle ou 3-thiopropyldiméthoxysilyle par un triméthylsilyle ou un terbutyldiméthylsilyle.

Le copolymère conforme à l'invention, décrit selon l'un quelconque des modes de réalisation de l'invention, y compris sous leurs variantes préférentielles, présente à la fois une rigidité plus faible et une cristallinité plus faible qu'un copolymère d'éthylène et de 1,3-butadiène qui présente pourtant le même taux d'éthylène. La substitution dans une composition de caoutchouc du copolymère conforme à l'invention à un copolymère d'éthylène et de 1,3-butadiène qui présente pourtant le même taux d'éthylène permet de conférer à une composition de caoutchouc une rigidité plus faible. En outre, la fonctionnalisation du copolymère avec une fonction amine permet d'améliorer l'interaction entre le copolymère et une charge renforçante, notamment un noir de carbone ou une silice ou leur mélange, ce qui contribue à améliorer les propriétés mécaniques du copolymère et par conséquent les propriétés mécaniques de la composition de caoutchouc contenant un copolymère conforme à l'invention et renforcée d'une charge renforçante. La présence d'une deuxième fonction sur le copolymère telle qu'une fonction silanol ou alcoxysilane permet d'améliorer encore davantage ces mêmes propriétés. Le copolymère conforme à l'invention est avantageusement un élastomère, dénommé ci-après par élastomère diénique et éthylénique. Il est en particulier destiné à être utilisé dans une composition de caoutchouc, notamment pour pneumatique.

La composition de caoutchouc, autre objet de l'invention, a donc pour caractéristique essentielle de comprendre un élastomère diénique et éthylénique conforme à l'invention.

De préférence, la composition de caoutchouc contient plus de 50 pce de l'élastomère diénique et éthylénique, de manière plus préférentielle au moins 80 pce de l'élastomère diénique et éthylénique. Le complément à 100 pce peut être constitué tout ou partie d'un élastomère diénique et éthylénique dépourvu de fonction silanol ou de fonction alcoxysilane. La composition de caoutchouc peut comprendre aussi un élastomère choisi dans le groupe des élastomères diéniques constitué par les polybutadiènes, les polyisoprènes, les copolymères de butadiène, les copolymères d'isoprène et leur mélange. Avantageusement, le taux de l'élastomère diénique et éthylénique conforme à l'invention est de 100 pce. L'élastomère diénique et éthylénique peut être constitué d'un mélange d'élastomères diéniques et éthyléniques qui se différencient les uns des autres par leurs microstructures ou par leurs macrostructures.

La composition de caoutchouc a aussi pour autre caractéristique essentielle de comprendre outre l'élastomère diénique et éthylénique une charge inorganique renforçante. Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyles (OH) à sa surface.

Comme charges inorganiques renforçantes conviennent notamment des charges minérales du type siliceuse, préférentiellement la silice (SiOz). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

De manière préférentielle, le taux de charge inorganique renforçante est compris entre 30 et 200 pce, plus préférentiellement entre 40 et 160 pce. L'une quelconque de ces plages de taux de charge inorganique renforçante peut s'appliquer à l'un quelconque des modes de réalisation de l'invention.

La composition de caoutchouc peut comprendre en outre du noir de carbone. Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique). Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante, notamment la silice.

Pour coupler la charge inorganique renforçante à l'élastomère, on utilise de manière bien connue un agent de couplage, notamment un silane, (ou agent de liaison) au moins bifonctionnel destiné à assurer une connexion suffisante entre la charge inorganique (surface de ses particules) et l'élastomère. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z - G - Sₓ - G - Z (V)

dans laquelle :
- x est un entier de 2 à 8 (de préférence de 2 à 5) ;
- les symboles G, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 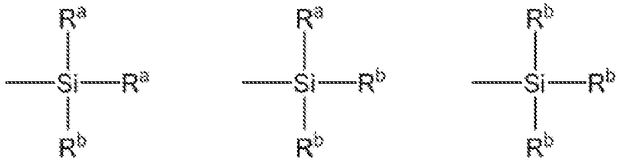
dans lesquelles :
- les radicaux R^{a} , substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en Ci-Ce, cyclohexyle ou phényle, notamment des groupes alkyle en C₁-C₄, plus particulièrement le méthyle et/ou l'éthyle),
- les radicaux R^{b}, substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupes fonctionnels azo-dicarbonyle, tels que décrits par exemple dans les demandes de brevets WO 2006/125532, WO 2006/125533, WO 2006/125534.

La teneur en agent de couplage est avantageusement inférieure à 30 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 16 pce, plus préférentiellement compris dans un domaine allant de 3 à 10 pce. Ce taux est aisément ajusté par l'homme du métier selon le taux de charge inorganique utilisé dans la composition.

La composition de caoutchouc conforme à l'invention peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru.

La composition de caoutchouc contient un système de réticulation. La réticulation chimique permet la formation de liaisons covalentes entre les chaînes d'élastomère. Le système de réticulation peut être un système de vulcanisation ou un ou plusieurs composés peroxydes, de préférence un système de vulcanisation.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 pce, en particulier de 1 à 10 pce. L'accélérateur primaire de vulcanisation est utilisé à un taux préférentiel compris entre 0.5 et 10 pce, plus préférentiellement compris entre 0.5 et 5 pce. On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de préférence de 0.01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

De manière générale, tous les constituants de base de la composition comprise dans le pneumatique de l'invention, à l'exception du système de réticulation, à savoir la charge inorganique renforçante, l'agent de couplage le cas échéant, sont incorporés de manière intime, par malaxage, à l'élastomère, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est un produit semi-fini qui peut être utilisé dans un pneumatique, notamment comme bande de roulement de pneumatique.

En résumé, l'invention est mise en oeuvre avantageusement selon l'un quelconque des modes de réalisation suivants 1 à 31 :
Mode 1 : Copolymère d'éthylène et d'un 1,3-diène de formule (I), lequel copolymère porte une fonction silanol ou alcoxysilane,

   CH₂=CR-CH=CH₂ (I)

   le symbole R représentant une chaîne hydrocarbonée ayant 3 à 20 atomes de carbone.
Mode 2 : Copolymère selon le mode 1 dans lequel la fonction silanol ou alcoxysilane est en extrémité de chaîne du copolymère.
Mode 3 : Copolymère selon l'un quelconque des modes 1 à 2, lequel copolymère est un copolymère statistique.
Mode 4 : Copolymère selon l'un quelconque des modes 1 à 3, lequel copolymère contient plus de 50% en mole d'unités éthylène.
Mode 5 : Copolymère selon l'un quelconque des modes 1 à 4, lequel copolymère contient au moins 60% en mole d'unités éthylène.
Mode 6 : Copolymère selon l'un quelconque des modes 1 à 5, lequel copolymère contient au moins 70% en mole d'unités éthylène.
Mode 7 : Copolymère selon l'un quelconque des modes 1 à 6 lequel copolymère contient au plus 90% en mole d'unités éthylène.
Mode 8 : Copolymère selon l'un quelconque des modes 1 à 6 lequel copolymère contient au plus 85% en mole d'unités éthylène .
Mode 9 : Copolymère selon l'un quelconque des modes 1 à 8, lequel copolymère contient des unités du 1,3-diène de configuration 1,2 ou 3,4, l'ensemble constitué par les unités du 1,3-diène de configuration 1,2 et les unités du 1,3-diène de configuration 3,4 représentant plus de 50% en mole des unités du 1,3-diène.
Mode 10 : Copolymère selon l'un quelconque des modes 1 à 9 dans lequel le symbole R représente une chaîne aliphatique.
Mode 11 : Copolymère selon l'un quelconque des modes 1 à 10 dans lequel le symbole R représente une chaîne hydrocarbonée ayant 6 à 16 atomes de carbone.
Mode 12 : Copolymère selon l'un quelconque des modes 1 à 11 dans lequel le symbole R représente une chaîne acyclique.
Mode 13 : Copolymère selon l'un quelconque des modes 1 à 12 dans lequel le symbole R représente une chaîne linéaire ou ramifiée.
Mode 14 : Copolymère selon l'un quelconque des modes 1 à 13 dans lequel le 1,3-diène est le myrcène ou le
Mode 15 : Copolymère selon l'un quelconque des modes 1 à 14 lequel copolymère présente une température de transition vitreuse inférieure à -35°C, de préférence comprise entre - 90°C et -35°C.
Mode 16 : Composition de caoutchouc qui comprend un copolymère défini selon l'un quelconque des modes 1 à 15, une charge inorganique renforçante et un système de réticulation, lequel copolymère est un élastomère.
Mode 17 : Composition de caoutchouc selon le mode 16 dans laquelle la charge inorganique renforçante est une silice.
Mode 18 : Pneumatique qui comprend une composition de caoutchouc définie selon le mode 16 ou 17.
Mode 19 : Procédé pour préparer un copolymère défini selon l'un quelconque des modes 1 à 15, lequel procédé comprend les étapes suivantes :
   (a) la copolymérisation d'éthylène et d'un 1,3 diène de formule (I) en présence d'un système catalytique comprenant un métallocène de formule (II) et un organomagnésien de formule (III)

      CH₂=CR-CH=CH₂ (I),

      P(Cp¹Cp²) Nd(BH₄)_{(1+y)-}L_{y}-Nₓ (II)

      MgR¹R² (III)

      le symbole R représentant une chaîne hydrocarbonée ayant 3 à 20 atomes de carbone,
      Cp¹ et Cp², identiques ou différents, étant choisis dans le groupe constitué par le groupe cyclopentadiényle de formule C₅H₄, le groupe fluorényle non substitué de formule C₁₃H₈ et les groupes fluorényles substitués,
      P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
      y, nombre entier, étant égal ou supérieur à 0,
      x, nombre entier ou non, étant égal ou supérieur à 0,
      L représentant un métal alcalin choisi dans le groupe constitué par le lithium, le sodium et le potassium,
      N représentant une molécule d'un éther, de préférence diéthyléther ou tétrahydrofuranne, R¹ et R², identiques ou différents, représentant un groupe carboné,
   (b) la réaction d'un agent de fonctionnalisation, composé de formule (IV), avec le copolymère obtenu à l'étape a), Si(Fc¹)_{4-g} (Rc²)_{g} (IV)
      les symboles Fc¹, identiques ou différents, représentant un groupe alcoxy ou un atome d'halogène,
      les symboles Rc², identiques ou différents, représentant un atome d'hydrogène, une chaîne hydrocarbonée ou une chaîne hydrocarbonée substituée par une fonction chimique Fc²,
      g étant un nombre entier allant de 0 à 2,
   (c) le cas échéant une réaction d'hydrolyse.
Mode 20 : Procédé selon le mode 19 dans lequel P désigne le groupe SiMe₂.
Mode 21 : Procédé selon l'un quelconque des modes 19 à 20 dans lequel Cp¹ et Cp², identiques ou différents, sont choisis dans le groupe constitué par les groupes fluorényles substitués et le groupe fluorényle non substitué de formule C₁₃H₈.
Mode 22 : Procédé selon l'un quelconque des modes 19 à 21 dans lequel le catalyseur métallocène est de formule [{Me₂SiFlu₂Nd(µ-BH₄)₂Li(THF)}₂] , [Me₂SiFlu₂Nd(µ-BH₄)₂Li(THF)], [Me₂SiFlu₂Nd(µ-BH₄)(THF)], [{Me₂SiFlu₂Nd(µ-BH₄)(THF)}₂] ou ; [Me₂SiFlu₂Nd(µ-BH₄)], le symbole Flu représentant le groupe fluorényle de formule C₁₃H₈ .
Mode 23 : Procédé selon l'un quelconque des modes 19 à 22 dans lequel l'organomagnésien est un dialkylmagnésien, préférentiellement le butyloctylmagnésium.
Mode 24 : Procédé selon l'un quelconque des modes 19 à 23 dans lequel au moins un des symboles Fc¹ représentent un groupe alcoxy.
Mode 25 : Procédé selon l'un quelconque des modes 19 à 24 dans lequel au moins deux des symboles Fc¹ représentent un groupe alcoxy.
Mode 26 : Procédé selon l'un quelconque des modes 19 à 25 dans lequel au moins trois des symboles Fc¹ représentent un groupe alcoxy.
Mode 27 : Procédé selon l'un quelconque des modes 19 à 26 dans lequel le groupe alcoxy est un méthoxy ou un éthoxy, de préférence un méthoxy.
Mode 28 : Procédé selon l'un quelconque des modes 19 à 27 dans lequel les symboles Rc² représentent un alkyle ayant au plus 6 atomes de carbone, de préférence méthyle ou éthyle, ou une chaîne alcanediyle ayant au plus 6 atomes de carbone et substituée par une fonction chimique Fc².
Mode 29 : Procédé selon l'un quelconque des modes 19 à 28 dans lequel la fonction chimique Fc² est une fonction amine primaire protégée par un groupe protecteur, une fonction amine secondaire protégée par un groupe protecteur, une fonction amine tertiaire ou une fonction thiol protégée par un groupe protecteur.
Mode 30 : Procédé selon le mode 29 dans lequel le groupe protecteur est un triméthylsilyle ou terbutyldiméthylsilyle.
Mode 31 : Procédé selon l'un quelconque des modes 19 à 30 dans lequel l'agent de fonctionnalisation est le diméthoxydiméthylsilane, le diéthoxydiméthylsilane, le diméthoxydiéthylsilane, le diéthoxydiéthylsilane, le (N,N-diméthyl-3-aminopropyl)méthyldiméthoxysilane, le (N,N-diméthyl-3-aminopropyl)méthyldiéthoxysilane, le (N,N-diméthyl-3-aminopropyl)éthyldiméthoxysilane, le (N,N-diméthyl-3-aminopropyl)éthyl-diéthoxysilane, le 3-méthoxy-3,8,8,9,9-pentaméthyl-2-oxa-7-thia-3,8-disiladecane, triméthoxy-méthylsilane, le triéthoxyméthylsilane, le triméthoxyéthylsilane, le triéthoxyéthylsilane, le (N,N-diméthylaminopropyl)triméthoxysilane, le (N,N-diméthylaminopropyl)triéthoxysilane, le (N-(3-triméthoxysilyl)propyl)-N-(triméthylsilyl)silanamine, le (N-(3-triéthoxysilyl)propyl)-N-(triméthyl-silyl)silanamine ou le 3,3-diméthoxy-8,8,9,9-tétraméthyl-2-oxa-7-thia-3,8-disiladecane, de préférence le diméthoxydiméthylsilane, le diméthoxydiéthylsilane, le (N,N-diméthyl-3-aminopropyl)méthyldiméthoxysilane, le (N,N-diméthyl-3-aminopropyl)éthyldiméthoxysilane, le 3-méthoxy-3,8,8,9,9-pentaméthyl-2-oxa-7-thia-3,8-disiladecanetriméthoxyméthylsilane, le triméthoxyéthylsilane, le (N,N-diméthylaminopropyl)triméthoxysilane, le (N-(3-triméthoxysilyl)-propyl)-N-(triméthylsilyl)silanamine ou le 3,3-diméthoxy-8,8,9,9-tétraméthyl-2-oxa-7-thia-3,8-disiladecane, de manière plus préférentielle le triméthoxyméthylsilane, triméthoxyéthylsilane, le (N,N-diméthylaminopropyl)triméthoxysilane, le (N-(3-triméthoxysilyl)propyl)-N-(triméthylsilyl)-silanamine ou le 3,3-diméthoxy-8,8,9,9-tétraméthyl-2-oxa-7-thia-3,8-disiladecane.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemple

### 1) Détermination de la microstructure des polymères :

La caractérisation spectrale et les mesures de la microstructure de copolymère d'éthylène-et du 1,3-diène (myrcène) sont réalisées par spectroscopie de Résonance Magnétique Nucléaire (RMN).

Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Cohérence) et HMBC (Heteronuclear Multiple-Bond Correlation) sont enregistrées avec un nombre de répétition de 128 et un nombre d'incréments de 128. Les expériences sont réalisées à 25 °C.

Préparation de l'échantillon : 25 mg d'échantillon sont solubilisés dans 1 mL de chloroforme deutéré (CDCl3).

Calibration de l'échantillon : Les axes des déplacements chimiques ¹H et ¹³C sont calibrés par rapport à l'impureté protonée du solvant (CHCl₃) à δ_{1H} = 7,2 ppm et δ_{13C} = 77 ppm.

Attribution spectrale : Les signaux des formes d'insertion du 1,3-diène A, B et C (schéma 1) ont été observés sur les différents spectres enregistrés. D'après S. Georges *et al.,* (S. Georges, M. Bria, P. Zinck and M. Visseaux, Polymer 55 (2014) 3869-3878), le signal du groupement -CH= n°8" caractéristique de la forme C présente des déplacements chimiques ¹H et ¹³C identiques au groupement -CH= n°3.

Les déplacements chimiques des signaux caractéristiques des motifs A, B et C sont présentés dans le tableau 1. Les motifs A, B et C correspondent respectivement aux unités de configuration 3,4, de configuration 1,2 et de configuration 1,4-trans.

### [Table 1]

**Tableau 1 : Attribution des signaux ¹H et ¹³C de copolymères Ethylène-Myrcène**

| δ_{1H} (ppm) | δ_{13C} (ppm) | Groupement |
|---|---|---|
| 5.54 | 146,4 | 8' |
| 5.07 | 124,6 | 3 + 8" |
| 4.97 - 4.79 | 112.0 | 9' |
| 4.67 | 108.5 | 7 |
| 2..06 | 26.5 | 4 |
| 2.0 - 1.79 | 31.8 | 5 + 5' + 5" |
| | 44.5 | 8 |
| 1.59 | 25.9 et 17.0 | 1 |
| 1.2 | 36.8 - 24.0 | CH₂ éthylène |

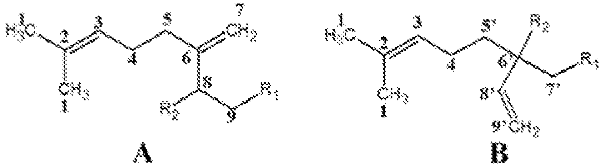

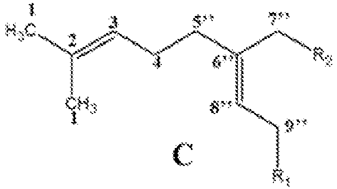

### 2) Détermination de la fonctionnalisation des polymères :

Les produits de fonctionnalisation des copolymères sont caractérisés par spectrométrie RMN ¹H, ¹³C, ²⁹Si. Les spectres RMN sont enregistrés sur un Spectromètre Brüker Avance III 500 MHz équipé d'une cryo-sonde « large bande » BBFOz-grad 5 mm. L'expérience RMN ¹H quantitative, utilise une séquence simple impulsion 30° et un délai de répétition de 5 secondes entre chaque acquisition. 64 à 256 accumulations sont réalisées. L'expérience RMN ¹³C quantitative, utilise une séquence simple impulsion 30° avec un découplage proton et un délai de répétition de 10 secondes entre chaque acquisition. 1024 à 10240 accumulations sont réalisées. Les expériences bidimensionnelles ¹H/¹³C et ¹H/²⁹Si sont utilisées dans le but de déterminer la structure des polymères fonctionnels. L'axe des déplacements chimiques ¹H est calibré par rapport à l'impureté protonée du solvant (CDCl₃) à δ_{1H} = 7,20 ppm. L'axe des déplacements chimiques ¹³C est calibré par rapport au signal du solvant (CDCl3) à δ_{13C} = 77 ppm. L'axe des déplacements chimiques ²⁹Si est calibré par rapport au signal du TMS à 0ppm (ajout de quelques micro litres de TMS dans le Tube RMN). La structure chimique finale de chaque polymère fonctionnel est identifiée par RMN (¹H, ¹³C et ²⁹Si).

Le spectre RMN 1D 1H enregistré dans des conditions quantitatives permet de calculer le taux de (N,N-dimethyl-3-aminopropyl)methyldimethoxysilane greffé au polymère. Les signaux des protons caractéristiques de la fonction greffée sont observables à des déplacements chimiques de 3.37 ppm pour le groupement méthoxy (CH3-O-Si), 0.11ppm à 0.02 ppm pour les groupements méthyls liés au silicium ((CH3)2-Si) et 0.66 ppm à 0.45 ppm pour le motif méthylène en alpha du silicium (Si-CH2-R). La structure de greffage est confirmée par une carte de corrélation bidimensionnelle proton/silicium-29. Les signaux silicium du (N,N-dimethyl-3-aminopropyl)methyldimethoxysilane greffé au polymère en bout de chaîne correspond à deux massifs à des déplacements chimiques 29Si entre 15ppm et 16ppm et entre 21 ppm et 23ppm. Ces massifs correspondent respectivement à la fonction liée à un motif diénique et à un motif à base d'éthylène

### 3) Détermination de la température de transition vitreuse des polymères :

La température de transition vitreuse est mesurée au moyen d'un calorimètre différentiel ("Differential Scanning Calorimeter") selon la norme ASTM D3418 (1999).

### 4) Détermination du taux de cristallinité des polymères :

La norme ISO 11357-3 :2011 est utilisée pour déterminer la température et l'enthalpie de fusion et de cristallisation des polymères utilisés par analyse calorimétrique différentielle (DSC). L'enthalpie de référence du polyéthylène est de 277,1 J/g (d'après Handbook of Polymer 4th Edition, J. BRANDRUP, E. H. IMMERGUT, and E. A. GRULKE, 1999)

### 5) Chromatographie d'exclusion stérique (SEC) :

### Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (*Ð* = Mw/Mn) peuvent également être calculées.

### b) Préparation du polymère :

Chaque échantillon est solubilisé dans du tétrahydrofuranne (+ 1%vol. de diisopropylamine + 1%vol. de triéthylamine) à une concentration d'environ 1 g/L. Puis la solution est filtrée sur filtre de porosité 0.45µm avant injection.

### c) Analyse SEC 3D pour les élastomères de l'invention :

Pour déterminer la masse molaire moyenne en nombre (Mn), et le cas échant la masse molaire moyenne en poids (Mw) et l'indice de polydispersité (Ip) des polymères conformes à l'invention, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du RI dépend de la concentration de l'échantillon, de la constante du détecteur RI et de la valeur du dn/dc. Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofuranne contenant 250 ppm de BHT (2,6-diter-butyle 4-hydroxy toluène), le débit est de 1 mL.min⁻¹, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 µL. Le système de détection est composé d'un viscosimètre différentiel Wyatt de dénomination commerciale « VISCOSTAR Il », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

### c) Analyse SEC 3D pour les élastomères non conformes ou témoin

L'appareillage utilisé est un chromatographe « WATERS Alliance ». Le solvant d'élution est du tétrahydrofuranne (+ 1%vol. de diisopropylamine + 1%vol. de triéthylamine), le débit de 0,5 mL/min, la température du système de 35°C. On utilise un jeu de quatre colonnes POLYMER LABORATORIES en série, de dénominations commerciales : deux « MIXED A LS » et deux « MIXED B LS ».

Le volume injecté de la solution de l'échantillon de polymère est 100 µL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670 nm. Pour le calcul des masses molaires moyennes est intégrée la valeur de l'incrément d'indice de réfraction dn/dC de la solution de polymère, valeur préalablement définie dans du tétrahydrofuranne (+ 1%vol. de diisopropylamine + 1%vol. de triéthylamine) à 35 °C et 670 nm. Le logiciel d'exploitation des données est le système « OMNISEC de VISCOTEK».

### 6) Détermination de la rigidité des compositions de caoutchouc (à cuit) :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 100% (cycle aller), puis de 100% à 0,1% (cycle retour). Les résultats exploités sont le module complexe de cisaillement dynamique (G*).

Les résultats de rigidité sont exprimés en base 100 par rapport à un témoin pris comme référence. Une valeur inférieure à 100 indique une valeur plus faible que celle du témoin.

### 7) Synthèses des polymères :

Dans la synthèse de copolymères conformes à l'invention, le 1,3-diène utilisé (myrcène) est un 1,3-diène de formule (I) dans lequel R est un groupe hydrocarboné ayant 6 atomes de carbone de formule CH₂-CH₂-CH=CMe₂.

Tous les réactifs sont obtenus commercialement excepté le métallocène [{Me₂SiFlu₂Nd(µ-BH₄)₂Li(THF)}] qui est préparé selon le mode opératoires décrit dans la demande de brevet WO 2007054224.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le myrcène (pureté ≥95%) est obtenu chez Sigma-Aldrich. Le (N,N-diméthyl-3-aminopropyl)méthyldiméthoxysilane est obtenu chez ABCR.

### Mode opératoire de polymérisation :

Dans un réacteur contenant du méthylcyclohexane, on ajoute le co-catalyseur, le butyloctylmagnésium (BOMAG) puis le métallocène [Me₂Si(Flu)₂Nd(µ-BH₄)₂Li(THF)]. La durée d'alkylation est de 10 minutes, la température de réaction est de 20 °C. Les quantités respectives des constituants du système catalytique figurent dans le tableau 2.

Ensuite, les monomères sont ajoutés de manière continue selon les quantités respectives indiquées dans le tableau 2. La polymérisation est conduite dans des conditions de température et de pression constante sont renseignées dans le tableau 2. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

### Mode opératoire de fonctionnalisation :

Lorsque la conversion en monomères souhaitée est atteinte, le contenu du réacteur est dégazé puis l'agent de fonctionnalisation, le (N,N-diméthyl-3-aminopropyl)méthyldiméthoxysilane, est introduit sous atmosphère inerte par surpression.

Le milieu réactionnel est agité pendant un temps et une température indiqués dans le tableau 3. Après réaction, le milieu est dégazé, puis précipité dans du méthanol. Le copolymère est récupéré par précipitation dans du méthanol, puis séché à 60°C sous vide jusqu'à masse constante. La microstructure et le taux de fonction de l'élastomère figurent dans le tableau 4, les autres caractéristiques de l'élastomère dans le tableau 5.

### 7) Préparation des compositions de caoutchouc :

Des compositions de caoutchouc dont la formulation exprimée en pce (parties en poids pour cent partie d'élastomère) figure dans le tableau 6, ont été préparées selon le mode opératoire suivant : on introduit dans un mélangeur interne (taux de remplissage final : environ 70% en volume), dont la température initiale de cuve est d'environ 80°C, successivement le copolymère, la silice, ainsi que les divers autres ingrédients a l'exception du système de vulcanisation. On conduit alors un travail thermomécanique (phase non-productive) en une étape, qui dure au total environ 5 min, jusqu'à atteindre une température maximale de « tombée » de 150°C. On récupère le mélange ainsi obtenu, on le refroidit puis on incorpore du soufre et l'accélérateur sur un mélangeur (homo-finisseur) à 40 °C, en mélangeant le tout (phase productive) pendant une dizaine de minutes. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

### 8) Résultats :

Les élastomères CE1 et CE2 sont des élastomères non conformes à l'invention, les élastomères E1 à E3 sont des élastomères conformes à l'invention.

Les propriétés des polymères figurent dans le tableau 5. Les valeurs de rigidité des compositions figurent dans le tableau 7.

Les élastomères E1, E2 et E3 présentent un taux de cristallinité proche de zéro et bien inférieur à celui de l'élastomère CE1 ou CE2.

Les résultats portant sur les compositions de caoutchouc montrent que l'élastomère E3 a la propriété de conférer à une composition de caoutchouc renforcée d'une silice une rigidité bien inférieure à celle conférée par l'élastomère CE2.

Ces résultats sur la cristallinité des élastomères et sur la rigidité des compositions de caoutchouc sont obtenus alors même que les élastomères présentent des taux d'unité éthylène très proches.

**[Table 2]**

| Ex | Métallocène (mol/L) | Co-catalyseur (mol/L) | Ratio Ethylène (mol) / Diène (mol) | Pression de polymérisation (bars) | Température de polymérisation (°C) |
|---|---|---|---|---|---|
| CE1 | 0.00015 | 0.00075 | 80/20 | 4 | 80 |
| CE2 | 0.00007 | 0.0004 | 80/20 | 8 | 80 |
| E1 | 0.00015 | 0.00078 | 70/30 | 4 | 80 |
| E2 | 0.00015 | 0.00078 | 70/30 | 4 | 60 |
| E3 | 0.00004 | 0.0002 | 65/35 | 8 | 70 |

**[Table 3]**

| Ex | Ratio agent fonctionnalisation / co-catalyseur (mol/mol) | Durée fonctionnalisation (min) | Température de fonctionnalisation (°C) |
|---|---|---|---|
| CE1 | 2 | 15 | 80 |
| CE2 | 4 | 15 | 80 |
| E1 | 4 | 60 | 80 |
| E2 | 4 | 60 | 60 |
| E3 | 4 | 15 | 70 |

**[Table 4]**

| Ex | Eth (%mol) | 1,3-diène | Unité 1,2 (%mol) | Unité 3,4 (% mol) | Unité 1,4 (%mol) | 1,2-cyclohexanediyle (%mol) | Taux de fonction (par chaîne polymère) |
|---|---|---|---|---|---|---|---|
| CE1 | 76.7 | Bde | 6 | - | 5.4 | 11.9 | 33% |
| CE2 | 76.7 | Bde | 9 | - | 5.6 | 8.7 | 35% |
| E1 | 75.0 | Myr | 1 | 15 | 8 | - | 28% |
| E2 | 75.0 | Myr | 1 | 15 | 7 | - | 45% |
| E3 | 76 | Myr | 1 | 16 | 7 | - | 35% |

| | | | | | | | |
|---|---|---|---|---|---|---|---|
| Eth : éthylène ; Bde : 1,3-butadiène ; Myr : myrcène | | | | | | | |

**[Table 5]**

| Ex | Mn (g/mol) | Tg (°C) | Cristallinité |
|---|---|---|---|
| CE1 | 30100 | -38 | 2.1 |
| CE2 | 139400 | -39 | 2.8 |
| E1 | 37100 | -64 | 0.2% |
| E2 | 47600 | -64 | 0.2% |
| E3 | 247200 | -63 | 0.2% |

**[Table 6]**

| Composition | C1 | C2 |
|---|---|---|
| Elastomère CE2 | 100 | 0 |
| Elastomère E3 | 0 | 100 |
| Noir de carbone (1) | 3 | 3 |
| Silice (2) | 94 | 94 |
| Agent plastifiant liquide (3) | 5 | 5 |
| Résine plastifiante (4) | 60 | 60 |
| Antioxydants (5) | 4 | 4 |
| Cire antiozonante | 2 | 2 |
| Agent de couplage (6) | 8.5 | 8.5 |
| Acide stéarique (7) | 2 | 2 |
| DPG (8) | 2.5 | 2.5 |
| ZnO (9) | 1 | 1 |
| Accélérateur (10) | 2.5 | 2.5 |
| Soufre | 1 | 1 |

| | | |
|---|---|---|
| (1) N234 (2) "Zeosil 1165 MP" de Solvay-Rhodia sous forme de microperles (3) MES/HPD (Catenex SNR de Shell) (4) Résine hydrocarbonée C9/Dicyclopentadiène «Escorez 5600» de la société EXXON (Tg = 55°C) (5) Mélange selon un ratio massique 70/30 de N-1,3-diméthylbutyl-N-phényl-para-phenyldiamine (« Santoflex 6-PPD » de Flexsys) et de 2,2,4-triméhyl-1,2-dihydroquinoline) (6) TESPT ("Si69" de Evonik) (7) Stéarine « Pristerene 4931 » de Uniquema (8) Diphénylguanidine (9) Oxyde de Zinc de grade industriel de Umicore (10) N-cyclohexyl-2-benzothiazol-sulfénamide (« Santocure CBS » de Flexsys) | | |

**[Table 7]**

| Composition | C1 | C2 |
|---|---|---|
| Rigidité 10% cycle retour 23°C | 100 | 64 |

## Revendications

1. Copolymère d'éthylène et d'un 1,3-diène de formule (I), lequel copolymère porte une fonction silanol ou alcoxysilane,
CH₂=CR-CH=CH₂ (I)
le symbole R représentant une chaîne hydrocarbonée ayant 3 à 20 atomes de carbone.

2. Copolymère selon la revendication 1 dans lequel la fonction silanol ou alcoxysilane est en extrémité de chaîne du copolymère.

3. Copolymère selon l'une quelconque des revendications 1 à 2, lequel copolymère contient plus de 50% en mole d'unités éthylène, préférentiellement au moins 60% en mole d'unités éthylène, plus préférentiellement au moins 70% en mole d'unités éthylène.

4. Copolymère selon l'une quelconque des revendications 1 à 3 lequel copolymère contient au plus 90% en mole d'unités éthylène, de préférence au plus 85% en mole d'unités éthylène.

5. Copolymère selon l'une quelconque des revendications 1 à 4, lequel copolymère contient des unités du 1,3-diène de configuration 1,2 ou 3,4, l'ensemble constitué par les unités du 1,3-diène de configuration 1,2 et les unités du 1,3-diène de configuration 3,4 représentant plus de 50% en mole des unités du 1,3-diène.

6. Copolymère selon l'une quelconque des revendications 1 à 5 dans lequel le symbole R représente une chaîne aliphatique.

7. Copolymère selon l'une quelconque des revendications 1 à 6 dans lequel le symbole R représente une chaîne hydrocarbonée ayant 6 à 16 atomes de carbone.

8. Copolymère selon l'une quelconque des revendications 1 à 7 dans lequel le symbole R représente une chaîne acyclique.

9. Copolymère selon l'une quelconque des revendications 1 à 8 dans lequel le symbole R représente une chaîne linéaire ou ramifiée.

10. Copolymère selon l'une quelconque des revendications 1 à 9 dans lequel le 1,3-diène est le myrcène ou le

11. Copolymère selon l'une quelconque des revendications 1 à 10 lequel copolymère présente une température de transition vitreuse inférieure à -35°C, de préférence comprise entre -90°C et -35°C, la température de transition vitreuse étant mesurée au moyen d'un calorimètre différentiel selon la norme ASTM D3418 (1999).

12. Composition de caoutchouc qui comprend un copolymère défini selon l'une quelconque des revendications 1 à 11, une charge inorganique renforçante, de préférence une silice, et un système de réticulation, lequel copolymère est un élastomère.

13. Pneumatique qui comprend une composition de caoutchouc définie selon la revendication 12.

14. Procédé pour préparer un copolymère défini selon l'une quelconque des revendications 1 à 11, lequel procédé comprend les étapes suivantes :
(a) la copolymérisation d'éthylène et d'un 1,3 diène de formule (I) en présence d'un système catalytique comprenant un métallocène de formule (II) et un organomagnésien de formule (III)
CH₂=CR-CH=CH₂ (I),
P(Cp¹Cp²)Nd(BH₄)_{(1+y)-}L_{y}-Nₓ (II)
MgR¹R² (III)
le symbole R représentant une chaîne hydrocarbonée ayant 3 à 20 atomes de carbone, Cp¹ et Cp², identiques ou différents, étant choisis dans le groupe constitué par le groupe cyclopentadiényle de formule C₅H₄, le groupe fluorényle non substitué de formule C₁₃H₈ et les groupes fluorényles substitués,
P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
R¹ et R², identiques ou différents, représentant un groupe carboné,
(b) la réaction d'un agent de fonctionnalisation, composé de formule (IV), avec le copolymère obtenu à l'étape a),
Si(Fc¹)_{4-g} (Rc²)_{g} (IV)
les symboles Fc¹, identiques ou différents, représentant un groupe alcoxy ou un atome d'halogène,
les symboles Rc², identiques ou différents, représentant un atome d'hydrogène, une chaîne hydrocarbonée ou une chaîne hydrocarbonée substituée par une fonction chimique Fc²,
g étant un nombre entier allant de 0 à 2,
(c) le cas échéant une réaction d'hydrolyse.

15. Procédé selon la revendication 14 dans lequel l'agent de fonctionnalisation est le diméthoxydiméthylsilane, le diéthoxydiméthylsilane, le diméthoxydiéthylsilane, le diéthoxydiéthylsilane, le (N,N-diméthyl-3-aminopropyl)méthyldiméthoxysilane, le (N,N-diméthyl-3-aminopropyl)méthyldiéthoxysilane, le (N,N-diméthyl-3-aminopropyl)éthyldiméthoxysilane, le (N,N-diméthyl-3-aminopropyl)éthyl-diéthoxysilane, le 3-méthoxy-3,8,8,9,9-pentaméthyl-2-oxa-7-thia-3,8-disiladecane, triméthoxy-méthylsilane, le triéthoxyméthylsilane, le triméthoxyéthylsilane, le triéthoxyéthylsilane, le (N,N-diméthylaminopropyl)triméthoxysilane, le (N,N-diméthylaminopropyl)triéthoxysilane, le (N-(3-triméthoxysilyl)propyl)-N-(triméthylsilyl)silanamine, le (N-(3-triéthoxysilyl)propyl)-N-(triméthyl-silyl)silanamine ou le 3,3-diméthoxy-8,8,9,9-tétraméthyl-2-oxa-7-thia-3,8-disiladecane, de préférence le diméthoxydiméthylsilane, le diméthoxydiéthylsilane, le (N,N-diméthyl-3-aminopropyl)méthyldiméthoxysilane, le (N,N-diméthyl-3-aminopropyl)éthyldiméthoxysilane, le 3-méthoxy-3,8,8,9,9-pentaméthyl-2-oxa-7-thia-3,8-disiladecanetriméthoxyméthylsilane, le triméthoxyéthylsilane, le (N,N-diméthylaminopropyl)triméthoxysilane, le (N-(3-triméthoxysilyl)-propyl)-N-(triméthylsilyl)silanamine ou le 3,3-diméthoxy-8,8,9,9-tétraméthyl-2-oxa-7-thia-3,8-disiladecane, de manière plus préférentielle le triméthoxyméthylsilane, triméthoxyéthylsilane, le (N,N-diméthylaminopropyl)triméthoxysilane, le (N-(3-triméthoxysilyl)propyl)-N-(triméthylsilyl)-silanamine ou le 3,3-diméthoxy-8,8,9,9-tétraméthyl-2-oxa-7-thia-3,8-disiladecane.

## Patentansprüche

1. Copolymer aus Ethylen und einem 1,3-Dien der Formel (I), wobei das Copolymer eine Silanol- oder Alkoxysilanfunktion trägt,
CH₂=CR-CH=CH₂ (I),
wobei das Symbol R für eine Kohlenwasserstoffkette mit 3 bis 20 Kohlenstoffatomen steht.

2. Copolymer nach Anspruch 1, wobei sich die Silanol- oder Alkoxysilanfunktion am Kettenende des Copolymers befindet.

3. Copolymer nach Anspruch 1 oder 2, wobei das Copolymer mehr als 50 Mol-% Ethyleneinheiten, bevorzugt mindestens 60 Mol-% Ethyleneinheiten, weiter bevorzugt mindestens 70 Mol-% Ethyleneinheiten, enthält.

4. Copolymer nach einem der Ansprüche 1 bis 3, wobei das Copolymer höchstens 90 Mol-% Ethyleneinheiten, vorzugsweise höchstens 85 Mol-% Ethyleneinheiten, enthält.

5. Copolymer nach einem der Ansprüche 1 bis 4, wobei das Copolymer 1,3-Dieneinheiten mit 1,2- oder 3,4-Konfiguration enthält, wobei die Gruppe bestehend aus den 1,3-Dieneinheiten mit 1,2-Konfiguration und den 1,3-Dieneinheiten mit 3,4-Konfiguration mehr als 50 Mol-% der 1,3-Dieneinheiten ausmachen.

6. Copolymer nach einem der Ansprüche 1 bis 5, wobei das Symbol R für eine aliphatische Kette steht.

7. Copolymer nach einem der Ansprüche 1 bis 6, wobei das Symbol R für eine Kohlenwasserstoffkette mit 6 bis 16 Kohlenstoffatomen steht.

8. Copolymer nach einem der Ansprüche 1 bis 7, wobei das Symbol R für eine acyclische Kette steht.

9. Copolymer nach einem der Ansprüche 1 bis 8, wobei das Symbol R für eine lineare oder verzweigte Kette steht.

10. Copolymer nach einem der Ansprüche 1 bis 9, wobei es sich bei dem 1,3-Dien um Myrcen oder β-Farnesen handelt.

11. Copolymer nach einem der Ansprüche 1 bis 10, wobei das Copolymer eine Glasübergangstemperatur von weniger als -35 °C, vorzugsweise zwischen -90 °C und -35 °C, aufweist, wobei die Glasübergangstemperatur mit einem Differentialkalorimeter gemäß ASTM-Norm D3418 (1999) gemessen wird.

12. Kautschukzusammensetzung, die ein Copolymer gemäß einem der Ansprüche 1 bis 11, einen verstärkenden anorganischen Füllstoff, vorzugsweise eine Kieselsäure, und ein Vernetzungssystem umfasst, wobei es sich bei dem Copolymer um ein Elastomer handelt.

13. Reifen, der eine Kautschukzusammensetzung gemäß Anspruch 12 umfasst.

14. Verfahren zur Herstellung eines Copolymers gemäß einem der Ansprüche 1 bis 11, wobei das Verfahren die folgenden Schritte umfasst:
(a) die Copolymerisation von Ethylen und einem 1,3-Dien der Formel (I) in Gegenwart eines katalytischen Systems, das ein Metallocen der Formel (II) und eine Organomagnesiumverbindung der Formel (III) umfasst,
CH₂=CR-CH=CH₂ (I),
P(Cp¹Cp²)Nd(BH₄)_{(1+y)-}L_{y}-Nₓ (II),
MgR¹R² (III),
wobei
das Symbol R für eine Kohlenwasserstoffkette mit 3 bis 20 Kohlenstoffatomen steht,
Cp¹ und Cp² gleich oder verschieden sind und aus der Gruppe bestehend aus der Cyclopentadienylgruppe der Formel C₅H₄, der unsubstituierten Fluorenylgruppe der Formel C₁₃H₈ und substituierten Fluorenylgruppen ausgewählt sind,
P eine die beiden Gruppen Cp¹ und Cp² verbrückende Gruppe ist und für eine Gruppe ZR³R⁴ steht, wobei Z für ein Silicium- oder Kohlenstoffatom steht und R³ und R⁴ gleich oder verschieden sind und jeweils für eine Alkylgruppe mit 1 bis 20 Kohlenstoffatomen, vorzugsweise ein Methyl, stehen,
y ganzzahlig ist und gleich oder größer als 0 ist,
x ganzzahlig oder nicht ganzzahlig ist und gleich oder größer als 0 ist,
L für ein Alkalimetall, das aus der Gruppe bestehend aus Lithium, Natrium und Kalium ausgewählt ist, steht,
N für ein Molekül eines Ethers, vorzugsweise von Diethylether oder Tetrahydrofuran, steht und
R¹ und R² gleich oder verschieden sind und für eine Kohlenstoffgruppe stehen,
(b) die Umsetzung eines Funktionalisierungsmittels, einer Verbindung der Formel (IV), mit dem in Schritt a) erhaltenen Copolymer,
Si(Fc¹)_{4-g}(Rc²)_{g} (IV),
wobei
die Symbole Fc¹ gleich oder verschieden sind und für eine Alkoxygruppe oder ein Halogenatom stehen,
die Symbole Rc² gleich oder verschieden sind und für ein Wasserstoffatom, eine Kohlenwasserstoffkette oder eine durch eine chemische Funktion Fc² substituierte Kohlenwasserstoffkette stehen und
g eine ganze Zahl im Bereich von 0 bis 2 ist,
(c) gegebenenfalls eine Hydrolysereaktion.

15. Verfahren nach Anspruch 14, wobei es sich bei dem Funktionalisierungsmittel um Dimethoxydimethylsilan, Diethoxydimethylsilan, Dimethoxydiethylsilan, Diethoxydiethylsilan, (N,N-Dimethyl-3-aminopropyl)methyldimethoxysilan, (N,N-Dimethyl-3-aminopropyl)methyldiethoxysilan, (N,N-Dimethyl-3-aminopropyl)ethyldimethoxysilan, (N,N-Dimethyl-3-aminopropyl)ethyldiethoxysilan, 3-Methoxy-3,8,8,9,9-pentamethyl-2-oxa-7-thia-3,8-disiladecan, Trimethoxymethylsilan, Triethoxymethylsilan, Trimethoxyethylsilan, Triethoxyethylsilan, (N,N-Dimethylaminopropyl)trimethoxysilan, (N,N-Dimethylaminopropyl)triethoxysilan, (N-(3-Trimethoxysilyl)propyl)-N-(trimethylsilyl)silanamin, (N-(3-Triethoxysilyl)propyl)-N-(trimethylsilyl)-silanamin oder 3,3-Dimethoxy-8,8,9,9-tetramethyl-2-oxa-7-thia-3,8-disiladecan, vorzugsweise Dimethoxydimethylsilan, Dimethoxydiethylsilan, (N,N-Dimethyl-3-aminopropyl)methyldimethoxysilan, (N,N-Dimethyl-3-aminopropyl)ethyldimethoxysilan, 3-Methoxy-3,8,8,9,9-pentamethyl-2-oxa-7-thia-3,8-disiladecantrimethoxymethylsilan, Trimethoxyethylsilan, (N,N-Dimethylaminopropyl)trimethoxysilan, (N-(3-Trimethoxysilyl)propyl)-N-(trimethylsilyl)-silanamin oder 3,3-Dimethoxy-8,8,9,9-tetramethyl-2-oxa-7-thia-3,8-disiladecan, weiter bevorzugt Trimethoxymethylsilan, Trimethoxyethylsilan, (N,N-Dimethylaminopropyl)trimethoxysilan, (N-(3-Trimethoxysilyl)propyl)-N-(trimethylsilyl)-silanamin oder 3,3-Dimethoxy-8,8,9,9-tetramethyl-2-oxa-7-thia-3,8-disiladecan, handelt.

## Claims

1. Copolymer of ethylene and of a 1,3-diene of formula (I), which copolymer bears a silanol or alkoxysilane function,
CH₂=CR-CH=CH₂ (I)
the symbol R representing a hydrocarbon chain having from 3 to 20 carbon atoms.

2. Copolymer according to Claim 1, in which the silanol or alkoxysilane function is at the chain end of the copolymer.

3. Copolymer according to either one of Claims 1 and 2, which copolymer contains more than 50 mol% of ethylene units, preferentially at least 60 mol% of ethylene units, more preferentially at least 70 mol% of ethylene units.

4. Copolymer according to any one of Claims 1 to 3, which copolymer contains at most 90 mol% of ethylene units, preferably at most 85 mol% of ethylene units.

5. Copolymer according to any one of Claims 1 to 4, which copolymer contains units of the 1,3-diene of 1,2 or 3,4 configuration, the group consisting of units of the 1,3-diene of 1,2 configuration and units of the 1,3-diene of 3,4 configuration representing more than 50 mol% of the units of the 1,3-diene.

6. Copolymer according to any one of Claims 1 to 5, in which the symbol R represents an aliphatic chain.

7. Copolymer according to any one of Claims 1 to 6, in which the symbol R represents a hydrocarbon chain having from 6 to 16 carbon atoms.

8. Copolymer according to any one of Claims 1 to 7, in which the symbol R represents an acyclic chain.

9. Copolymer according to any one of Claims 1 to 8, in which the symbol R represents a linear or branched chain.

10. Copolymer according to any one of Claims 1 to 9, in which the 1,3-diene is myrcene or β-farnesene.

11. Copolymer according to any one of Claims 1 to 10, which copolymer has a glass transition temperature below -35°C, preferably between -90°C and -35°C, the glass transition temperature being measured by means of a differential calorimeter (differential scanning calorimeter) according to Standard ASTM D3418 (1999).

12. Rubber composition which comprises a copolymer defined according to any one of Claims 1 to 11, a reinforcing inorganic filler, preferably a silica, and a crosslinking system, which copolymer is an elastomer.

13. Tyre which comprises a rubber composition defined according to Claim 12.

14. Process for preparing a copolymer defined according to any one of Claims 1 to 11, which process comprises the following steps:
(a) the copolymerization of ethylene and of a 1,3-diene of formula (I) in the presence of a catalytic system comprising a metallocene of formula (II) and an organomagnesium compound of formula (III)
CH₂=CR-CH=CH₂ (I),
P(Cp¹Cp²)Nd(BH₄)_{(1+y)-}L_{y}-Nₓ (II)
MgR¹R² (III)
the symbol R representing a hydrocarbon chain having from 3 to 20 carbon atoms,
Cp¹ and Cp², which may be identical or different, being selected from the group consisting of the cyclopentadienyl group of formula C₅H₄, the unsubstituted fluorenyl group of formula C₁₃H₈ and substituted fluorenyl groups,
P being a group bridging the two Cp¹ and Cp² groups and representing a ZR³R⁴ group, Z representing a silicon or carbon atom, R³ and R⁴, which are identical or different, each representing an alkyl group comprising from 1 to 20 carbon atoms, preferably a methyl,
y, which is an integer, being equal to or greater than 0,
x, which may or may not be an integer, being equal to or greater than 0,
L representing an alkali metal selected from the group consisting of lithium, sodium and potassium,
N representing a molecule of an ether, preferably diethyl ether or tetrahydrofuran,
R¹ and R², which are identical or different, representing a carbon group,
(b) the reaction of a functionalizing agent, compound of formula (IV), with the copolymer obtained in step a),
Si(Fc¹)_{4-g}(Rc²)_{g} (IV)
the Fc¹ symbols, which may be identical or different, representing an alkoxy group or a halogen atom,
the Rc² symbols, which may be identical or different, representing a hydrogen atom, a hydrocarbon chain or a hydrocarbon chain substituted by a chemical function Fc²,
g being an integer ranging from 0 to 2,
(c) where appropriate, a hydrolysis reaction.

15. Process according to Claim 14, in which the functionalizing agent is dimethoxydimethylsilane, diethoxydimethylsilane, dimethoxydiethylsilane, diethoxydiethylsilane, (N,N-dimethyl-3-aminopropyl)methyldimethoxysilane, (N,N-dimethyl-3-aminopropyl)methyldiethoxysilane, (N,N-dimethyl-3-aminopropyl)ethyldimethoxysilane, (N,N-dimethyl-3-aminopropyl)ethyldiethoxysilane, 3-methoxy-3,8,8,9,9-pentamethyl-2-oxa-7-thia-3,8-disiladecane, trimethoxymethylsilane, triethoxymethylsilane, trimethoxyethylsilane, triethoxyethylsilane, (N,N-dimethylaminopropyl)trimethoxysilane, (N,N-dimethylaminopropyl)triethoxysilane, (N-(3-trimethoxysilyl)propyl)-N-(trimethylsilyl)silanamine, (N-(3-triethoxysilyl)propyl)-N-(trimethylsilyl)silanamine or 3,3-dimethoxy-8,8,9,9-tetramethyl-2-oxa-7-thia-3,8-disiladecane, preferably dimethoxydimethylsilane, dimethoxydiethylsilane, (N,N-dimethyl-3-aminopropyl)methyldimethoxysilane, (N,N-dimethyl-3-aminopropyl)ethyldimethoxysilane, 3-methoxy-3,8,8,9,9-pentamethyl-2-oxa-7-thia-3,8-disiladecane, trimethoxymethylsilane, trimethoxyethylsilane, (N,N-dimethylaminopropyl)trimethoxysilane, (N-(3-trimethoxysilyl)propyl)-N-(trimethylsilyl)silanamine or 3,3-dimethoxy-8,8,9,9-tetramethyl-2-oxa-7-thia-3,8-disiladecane, more preferentially trimethoxymethylsilane, trimethoxyethylsilane, (N,N-dimethylaminopropyl)trimethoxysilane, (N-(3-trimethoxysilyl)propyl)-N-(trimethylsilyl)silanamine or 3,3-dimethoxy-8,8,9,9-tetramethyl-2-oxa-7-thia-3,8-disiladecane.
